(19) Europäisches Patentamt
European Patent Office
Office européen des brevets

(11) **EP 1 729 471 B1**

(12) **EUROPÄISCHE PATENTSCHRIFT**

(45) Veröffentlichungstag und Bekanntmachung des Hinweises auf die Patenterteilung:
**16.07.2008  Patentblatt 2008/29**

(51) Int Cl.:
***H04L 27/00*** *(2006.01)*

(21) Anmeldenummer: **06010667.1**

(22) Anmeldetag: **23.05.2006**

(54) **Verfahren zur Klassifizierung von ditgital modulierten Signalen**

Method for classification of digital modulated signals

Procédé pour classification des signaux numériques modulés

(84) Benannte Vertragsstaaten:
**DE GB**

(30) Priorität: **02.06.2005   DE 102005025402**

(43) Veröffentlichungstag der Anmeldung:
**06.12.2006   Patentblatt 2006/49**

(73) Patentinhaber: **Rohde & Schwarz GmbH & Co. KG**
**81671 München (DE)**

(72) Erfinder: **Scharl, Peter**
**81547 München (DE)**

(74) Vertreter: **Körfer, Thomas et al**
**Mitscherlich & Partner**
**Patent- und Rechtsanwälte**
**Postfach 33 06 09**
**80066 München (DE)**

(56) Entgegenhaltungen:
**US-B1- 6 240 282**

- **BOUDREAU D ET AL: "A fast automatic modulation recognition algorithm and its implementation in a spectrum monitoring application" MILCOM 2000. 21ST CENTURY MILITARY COMMUNICATIONS CONFERENCE PROCEEDINGS 22-25 OCTOBER 2000, PISCATAWAY, NJ, USA,IEEE, Bd. 2, 22. Oktober 2000 (2000-10-22), Seiten 732-736, XP010532001 ISBN: 0-7803-6521-6**
- **DOBRE O A ET AL: "Blind modulation classification: a concept whose time has come" ADVANCES IN WIRED AND WIRELESS COMMUNICATION, 2005 IEEE/SARNOFF SYMPOSIUM ON PRINCETON, NEW JERSEY, USA APRIL 18-19, 2005, PISCATAWAY, NJ, USA, IEEE, 18. April 2005 (2005-04-18), Seiten 223-228, XP002395955 ISBN: 0-7803-8854-2**

**Beschreibung**

Die Erfindung betrifft ein Verfahren zur Klassifizierung von digital modulierten Signalen.

Zur Analyse unbekannter Signale ist es bekannt, mittels einer FFT (Fast-Fourier-Transformation) zunächst ein Leistungsspektrum zu schätzen und anschließend signifikante Spektralanteile mittels eines automatischen Modulationsartenerkenners zu analysieren. Der automatische Modulationsartenerkenner verwendet dabei keine Informationen über für bestimmte Modulationsarten charakteristische Signalparameter. Es muß daher aus dem empfangenen Signal in einem aufwendigen Verfahren eine Blindentzerrung durchgeführt werden. Die blinde Entzerrung des empfangenen Signals ist erforderlich, um aus dem Signal die informationstragenden Parameter Phase und Betrag ermitteln zu können. Zum Klassifizieren des Signals werden die spektralen Informationen ausgewertet.

In der US 6,690,746 B1 ist es vorgeschlagen, einen Signalklassifikator zu verwenden, der mehrere Module enthält. Diese einzelnen Module sind verschiedenen Modulationsarten zugeordnet, so dass jedes der Module das ankommende Signal ausschließlich im Hinblick auf diese Modulationsart auswertet. Die zur Demodulation eines eingehenden Signals erforderlichen Parameter werden dabei innerhalb eines jeden Moduls aus dem unbekannten Eingangssignal ermittelt.

Bei dem bekannten Verfahren ist es nachteilig, daß die Detektionssicherheit in einem solchen einstufigen Verfahren, bei dem alle Informationen ohne Vorkenntnisse direkt aus dem empfangenen Signal zu bestimmen sind, gering ist.

Aus der US 6,240,282 B 1 ist ein Verfahren bekannt, bei dem zunächst aus dem empfangenen Signal Parameter und Merkmale extrahiert werden. Diese Parameter und Merkmale dienen der Klassifizierung eines Signals. Die Klassifizierung wird in einem einstufigen Verfahren durchgeführt. Nach der durchgeführten Klassifizierung werden die gewonnenen Erkenntnisse dazu verwendet, den ursprünglichen Signalinhalt zu rekonstruieren.

Aus der Druckschrift "A fast automatic modulation recognition algorithm and its implementation in a spectrum monitoring application", Boudreau et al, MILCOM 2000. 21 ST CENTURY MILITARY COMMUNICATIONS CONFERENCE PROCEEDINGS 22-25 OCTOBER 2000, PISCATAWAY, NJ, USA, IEEE, Bd. 2, 22. Oktober 2000 (2000-10-22) ist es dagegen bekannt, in einem mehrstufigen Verfahren eine Klassifizierung von unbekannten Signalen durchzuführen. Hierzu wird in einem mehrstufigen Ausschlussverfahren die mögliche Modulation stufenweise ermittelt.

Der Erfindung liegt daher die Aufgabe zugrunde, ein Verfahren sowie ein entsprechendes Computerprogramm-Produkt und ein Computerprogramm zu schaffen, bei dem die Klassifizierung unbekannter Signale mit einer höheren Detektionssicherheit möglich ist.

Die Aufgabe wird durch das Verfahren mit den Merkmalen nach Anspruch 1 sowie das Computerprogramm-Produkt nach Anspruch 12 und das entsprechende Computerprogramm-Produkt nach Anspruch 13 gelöst.

Erfindungsgemäß erfolgt die Klassifizierung eines unbekannten Signals in zwei aufeinanderfolgenden Auswertestufen. Zunächst wird ein digital moduliertes Signal empfangen. Aus dem empfangenen Signal wird ein komplexes Basisbandsignal erzeugt. Auf Basis des komplexen Basisbandsignals erfolgt dann in einer ersten Auswertestufe eine Vorklassifizierung des Signals. Zu dieser Vorklassifizierung wird das komplexe Basisbandsignal im Frequenzbereich analysiert. Das Ergebnis dieser Vorklassifizierung wird einer zweiten Auswertestufe zugrundegelegt. In der zweiten Auswertestufe wird für das Basisbandsignal zur genaueren Analyse zunächst eine erste Symbolrate erster Genauigkeit ermittelt. Es wird eine zweite Symbolrate höherer Genauigkeit und ein Phasen-Offset ermittelt, wobei zur Ermittlung der zweiten Symbolrate und des Phasen-Offsets eine Regressionsanalyse auf Basis von Symbollängen des komplexen Basisbandsignals durchgeführt wird.

In den Unteransprüchen sind vorteilhafte Weiterbildungen des erfindungagemäßen Verfahrens ausgeführt.

Insbesondere ist es vorteilhaft, eine Kreuzkorrelation des Symbolstroms des empfangenen Signals mit einem komplexen Referenzsymbolstrom durchzuführen. Der komplexe Referenzsymbolstrom ist für verschiedene Übertragungssysteme bekannt, so daß aus dem Ergebnis der Kreuzkorrelation das Auftreten des entsprechenden Symbolstroms in dem empfangenen Signal gezielt ermittelt wird. Bei einer Übereinstimmung der beiden Symbolströme läßt sich mit hoher Sicherheit das empfangene Signal einem bestimmten Übertragungssystem und damit einer Modulationsart zuordnen.

Das erfindungsgemäße Verfahren ist in der Zeichnung dargestellt und wird in der nachfolgenden Beschreibung näher erläutert. Es zeigen:

Fig. 1      ein Blockschaltbild zur Verarbeitung eines empfangenen Signals bei der Durchführung des erfindungsgemäßen Verfahrens;

Fig. 2      eine schematische Darstellung der Auswertestufen des erfindungsgemäßen Verfahrens;

Fig. 3      eine schematische Darstellung zum Ablauf einer Symbolratenbestimmung mittels des erfindungsgemäßen Verfahrens;

Fig. 4      Beispieldiagramme zur Bestimmung unterschiedlicher PSK-Modulationsarten durch kohärente Demodulation;

Fig. 5      eine schematische Darstellung der Klassifizierung aufgrund bekannter Symboldaten und

Fig. 6 ein Diagramm zur Auswertung der Linien nach einer Auto- bzw. Kreuzkorrelation.

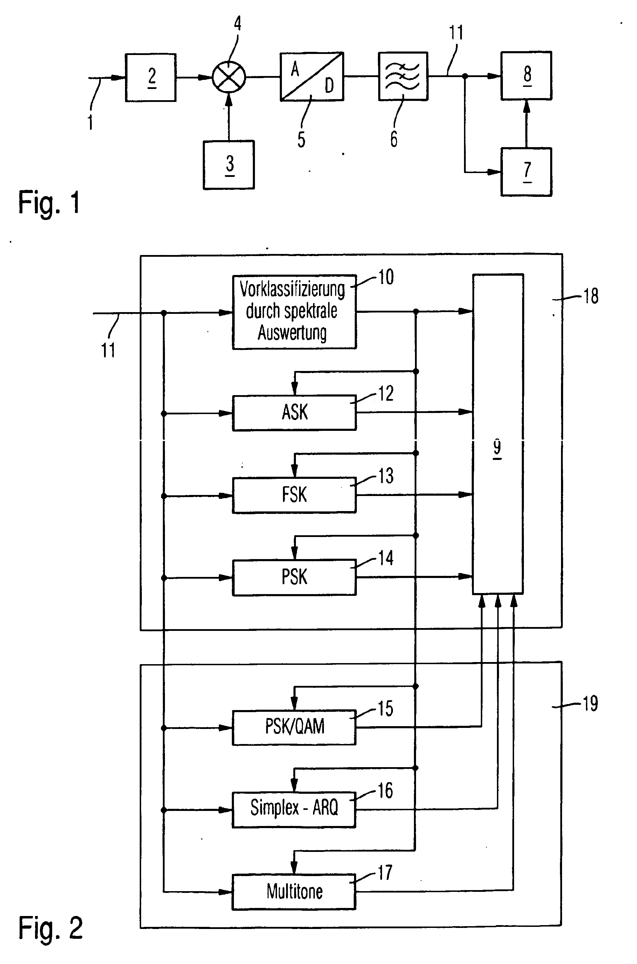

In Fig. 1 ist zunächst eine Übersicht zur Verarbeitung eines unbekannten Signals bei der Durchführung des erfindungsgemäßen Verfahrens dargestellt. Ein digital moduliertes Signal 1 wird zunächst durch eine Empfangseinheit 2 empfangen. Durch Mischen des Signals 1 mit einer Frequenz, die durch den lokalen Oszillator 3 erzeugt wird, wird in dem Mischer 4 das empfangene Signal 1 auf eine Zwischenfrequenz gemischt. Das Zwischenfrequenzsignal wird einem Analog-/Digital-Wandler 5 zugeführt, der das Signal abtastet. Die Abtastfrequenz des Analog-/Digital-Wandlers 5 ist vorzugsweise mindestens das Achtfache der Signalbandbreite. Das unterabgetastete Zwischenfrequenzsignal wird einem Tiefpaßfilter 6 zugeführt. Am Ausgang des Tiefpaßfilters 6 steht daher für die weitere Verarbeitung ein komplexes Basisbandsignal 11 zur Verfügung.

Das komplexe Basisbandsignal 11 ist ein Signal unbekannter, digitaler Modulationsart, für das nachfolgend in einem zweistufigen Verfahren die verwendete Modulationsart bestimmt wird. Hierzu wird das komplexe Basisbandsignal in einer ersten Auswertestufe einer ersten Verarbeitungseinheit 7 ausgewertet. Die Ergebnisse der ersten Auswertestufe und das komplexe Basisbandsignal 11 werden einer zweiten Verarbeitungseinheit 8 zur Durchführung der zweiten Auswertestufe zugeführt. Nach der Durchführung der zweiten Auswertestufe steht das klassifizierte Signal zur weiteren Analyse zur Verfügung, wobei zu diesem Zeitpunkt mit einer hohen Detektionssicherheit die für das empfangene Signal 1 verwendete Modulationsart bestimmt ist.

Anhand der Fig. 2 soll die zweistufige Auswertung erläutert werden. Die Ergebnisse der Vorklassifizierung sowohl der ersten Auswertestufe als auch der Klassifizierung der zweiten Auswertestufe werden einer Auswerteeinheit 9 zugeführt. Zur Vorklassifizierung wird zunächst das komplexe Basisbandsignal 11 in einem ersten Auswerteblock 10, der der Verarbeitungseinheit 7 der Fig. 1 entspricht, zugeführt. In dem ersten Auswerteblock 10 werden das lineare Spektrum sowie höherwertige Spektren aus dem komplexen Basisbandsignal 11 berechnet. Hierzu wird aus dem komplexen Basisbandsignal 11 mit Trägerfrequenz 0 Hz zunächst das lineare Spektrum, z.B. mittels Fast-Fourier-Transformation (FFT), berechnet. Als höherwertige Spektren werden das einfach komplexquadrierte und das zweifach komplexquadrierte Spektrum berechnet. Zudem wird das Spektrum des Betragsquadrates und ein weiteres Spektrum nach einer Verzögerung sowie einer Multiply-Operation berechnet. Es stehen somit insgesamt fünf Spektren zur Verfügung, die sämtlich in dem ersten Auswerteblock 10 ermittelt werden.

In den einzelnen Spektren ergeben sich charakteristische Linien, aus denen auf bestimmte Modulationsverfahren geschlossen werden kann. Allerdings ist eine Auswertung allein aufgrund der Linien in den einzelnen Spektren lediglich mit einer begrenzten Sicherheit möglich. Grundsätzlich kann in der Vorklassifikation zwischen folgenden Modulationsarten unterschieden werden: ASK2, FSK, MSK, PSK2-A, PSK2-B, PSK4-A, PSK4-B und 0-QPSK. Zudem wird bereits in der Vorklassifikation bei linearen Modulationsverfahren eine Symbolrate bestimmt. Die ermittelten Werte werden der Auswerteeinheit 9 zugeführt, und dort zwischengespeichert. Neben den erkannten Parametern, wie beispielsweise der Symbolrate und der Signalbandbreite, wird für die erkannte Modulationsart auch eine Wahrscheinlichkeit angegeben, mit der diese Modulationsart zutreffend ist (Konfidenz). Aufgrund der begrenzten Analysemöglichkeiten aus den berechneten Spektren ist die Konfidenz des Ergebnisses der Vorklassifikation nicht ausreichend, um eine weitere Auswertung des empfangenen Signals 1 allein aufgrund dieser Information durchführen zu können.

Um eine höhere Sicherheit bei der Klassifizierung des empfangenen Signals zu erreichen, wird ausgehend von den Ergebnissen der Vorklassifizierung in einer zweiten Auswertestufe eine Bestätigung dieses Ergebnisses durchgeführt. Das weitere Vorgehen ist dabei abhängig von der in der Vorklassifizierung erkannten Modulationsart.

Wird in der Vorklassifizierung als Ergebnis eine der Modulationsarten ASK, FSK oder PSK ermittelt, so wird als zweite Auswertestufe eine Auswertung im Zeitbereich vorgenommen, wobei für diese Auswertung keine Kenntnisse über bestimmte Parameter der entsprechenden Modulationsart vorliegen müssen.

Hierzu sind weitere Auswerteblöcke 12 bis 14 vorgesehen, die zusammen mit dem ersten Auswerteblock 10 eine erste Gruppe von Auswerteblöcken 18 bilden, bei denen eine Auswertung ohne Vorkenntnisse über bestimmte Parameter des Modulationsverfahrens durchgeführt wird.

Eine zweite Gruppe 19 wird aus den Auswerteblöcken 15 bis 17 gebildet. Die Auswerteblöcke 15 bis 17 dienen der Durchführung der Auswertung des komplexen Basisbandsignals 11 in der zweiten Auswertestufe, wenn durch die Vorklassifizierung in dem ersten Auswerteblock 10 ein PSK/QAM, ein Simplex-ARQ oder ein Multitone-Verfahren zur Modulation des empfangenen Signals 1 erkannt wurde. Die zweite Gruppe 19 verwendet bei ihrer Auswertung des komplexen Basisbandsignals 11 Vorkenntnisse über charakteristische Parameter der verwendeten Modulationsart. Solche Parameter können z.B. bestimmte Symbolfolgen sein, die typischerweise beim Senden eines mit einem bestimmten Modulationsverfahren modulierten Signals gesendet werden.

Während die erste Auswertestufe allein durch den ersten Auswerteblock 10 durchgeführt wird, in der eine Vorklassifizierung des komplexen Basisbandsignals 11 durchgeführt wird, kann die Auswertung des komplexen Basisbandsignals in den zweiten bis vierten Auswerteblöcken 12, 13, 14 und/oder in den fünften bis siebten Auswerteblöcken 15, 16, 17 durchgeführt werden. Dabei stehen lediglich zur Auswertung in den Auswerteblöcken 15 bis 17 Vorkenntnisse über die Modulationsverfahren zur Verfügung.

Am Beispiel eines in der Vorklassifizierung als FSK (Frequency Shift Keying)-Signal erkannten Signals, wird nachfolgend beispielhaft die Analyse des komplexen Basisbandsignals 11 im Zeitbereich durch den dritten Auswerteblock 13 erläutert.

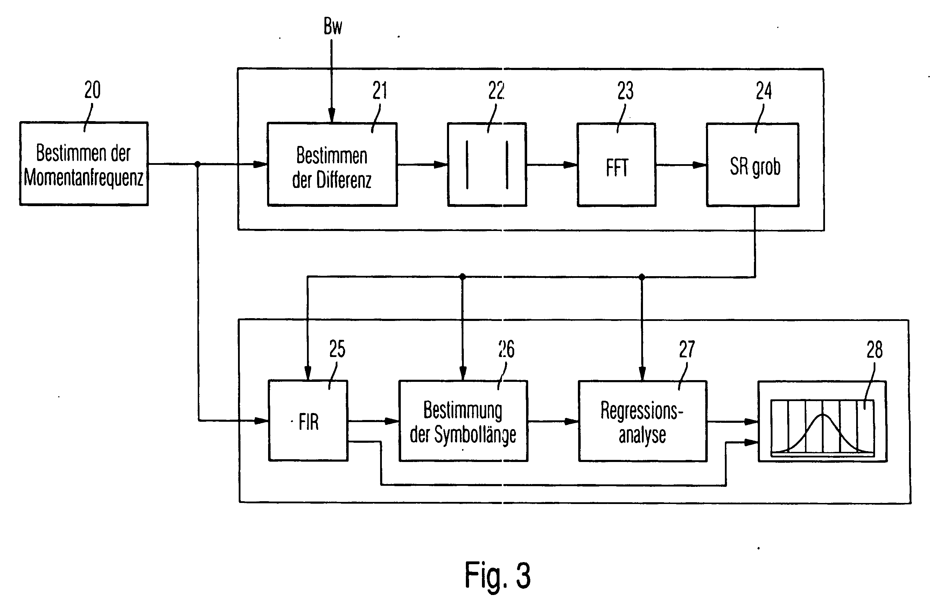

Eine schematische Darstellung ist hierzu in der Fig. 3 dargestellt. Um zur weiteren Analyse des empfangenen Signals eine synchrone Auswertung zu ermöglichen, müssen die Abtastzeitpunkte exakt bestimmt werden. Zunächst ist hierzu die Bestimmung der Symbolrate erforderlich. Da im Leistungsspektrum eines demodulierten FSK-Signals eine Auswertung der Spektrallinien nicht möglich ist, muß zur Ermittlung der Symbolrate eine nichtlineare Operation durchgeführt werden. Bei realen Signalen sind die Übergänge zwischen den einzelnen Frequenzniveaus des FSK-Signals aufgrund des Signalrauschens und der Basisbandfilterung nicht scharf genug ausgebildet, um eine mathematische Differenzierung durchführen zu können.

Erfindungsgemäß wird daher anstelle der Differenzierung eine Differenzwertbildung mit einer Verzögerung durchgeführt. In einem ersten Verfahrensschritt 20 wird hierzu aus dem komplexen Basisbandsignal 11 für verschiedene Zeitpunkte der momentane Frequenzwert ermittelt. Aus diesen Momentanfrequenzwerten wird in einem zweiten Schritt 21 ein Differenzwert zwischen einem bestimmten Momentanwert und einem hierzu verzögert liegenden Momentanwert berechnet. Die ideale Verzögerung würde dabei der halben Symbolrate entsprechen. Da die Symbolrate unbekannt ist, muß mit einem Schätzwert für die Verzögerung gearbeitet werden. Ein solcher Schätzwert wird aus der Bandbreite ermittelt. Die Bandbreite (Bw) eines FSK-Signals ergibt sich grob als

$$Bw \cong K \cdot Shift + Symbolrate \ .$$

K ist dabei ein Faktor, der zwischen 1 und 2 liegt. "Shift" gibt den Unterschied zwischen den beiden Frequenzniveaus an. Für die Verzögerung kann damit ein ungefährer Wert angegeben werden, der sich zu

$$Delay = \frac{K \cdot f_{Samp}}{\hat{B}_w}$$

ergibt. Idealerweise werden durch diese Verzögerung die Maxima bzw. Minima des zeitlichen Frequenzverlaufs zur Differenzwertbildung gefunden. Nachdem für alle Momentanfrequenzen auf diese Weise Differenzfrequenzen ermittelt wurden, wird in einem dritten Schritt 22 der Betrag der Differenzwerte genommen, um hieraus anschließend eine Symboltaktlinie erzeugen zu können. Die Betragsbildung ist erforderlich, da in Abhängigkeit von der Richtung des Frequenzsprungs auch negative Differenzwerte auftreten können. Nach der Bildung des Betrags in dem dritten Schritt 22 wird in einem vierten Schritt 23 eine FFT durchgeführt, aus der sich im fünften Schritt 24 die Symbolrate mit einer ersten Genauigkeit bestimmt.

Um eine synchrone Abtastung zu gewährleisten, ist es erforderlich, neben der Symbolrate auch einen Phasen-Offset exakt zu bestimmen. Hierzu wird ausgehend von der Symbolrate, die mit einer ersten Genauigkeit bestimmt wurde, eine Symbolrate mit einer zweiten, höheren Genauigkeit bestimmt. Gleichzeitig mit der Bestimmung der genaueren zweiten Symbolrate wird mit Hilfe einer Regressionsauswertung, die zum Bestimmen der genaueren zweiten Symbolrate durchgeführt wird, auch der Phasen-Offset bestimmt. Die mit Hilfe der Regressionsauswertung bestimmte genauere zweite Symbolrate hängt nicht mehr wie die Symbolrate erster Genauigkeit von der gewählten FFT-Auflösung ab.

In dem fünften Schritt 24 wird die Symbolrate mit einer ersten Genauigkeit bestimmt, indem durch das durch die FFT ermittelte Frequenzspektrum die am stärksten vertretene Linie ausgewählt wird. Die Frequenz dieser Linie entspricht der Symbolrate erster Genauigkeit.

Bevor mit Hilfe der Regressionsanalyse die Symbolrate mit höherer Genauigkeit und der Phasen-Offset bestimmt werden können, muß zunächst sichergestellt werden, daß das demodulierte Signal keinen oder einen in Relation zur Frequenz-Shift sehr geringen Frequenz-Offset aufweist. Dies kann erreicht werden, indem das Basisbandsignal 11 mit Hilfe eines Mittelwertfilters 25, z.B. ein sinX/X-Filter gebildet wird. Diese Tiefpaßfilterung wird vorzugsweise mit einem FIR-Filter mit einem konstanten Koeffizienten realisiert. Der Koeffizient entspricht dem Kehrwert der Filterlänge (1/FLen). Die Filterlänge ist dabei definiert als

$$FLen = Round\left(\frac{D \cdot f_{Samp}}{SR_{Grob}}\right) .$$

$f_{Samp}$ ist die Abtastfrequenz und $SR_{Grob}$ die erste, grob ermittelte Symbolrate. Der Parameter D ist ein empirisch bestimmter Wert aus einem von 0,5 bis 1,0 reichenden Intervall. Die Filterung erfolgt in einem Tiefpaßfilter 25.

Nachdem das komplexe Basisbandsignal 11 in dem Tiefpaßfilter 25 gefiltert wurde, werden die Nulldurchgänge des Basisbandsignals 11 detektiert, also diejenigen Stellen auf der Zeitskala ermittelt, zu denen ein Wechsel der Frequenzen und damit ein Symbolwechsel erfolgt. Aus der zeitlichen Länge eines bestimmten Symbols wird nun zusammen mit der zuvor ermittelten Symbolrate eine zu der ermittelten zeitlichen Symbollänge korrespondierende Anzahl von Bits bestimmt.

Zur Bestimmung der Regressionsgeraden wird zunächst die Anzahl der Abtastwerte pro Symbol ermittelt. Die Abtastfrequenz selbst $f_{Samp}$ ist bekannt und auch die Symbolrate $SR_{Grob}$ wurde bereits ermittelt. Daher ergibt sich die Anzahl der Abtastwerte für ein Symbol zwischen zwei Symbolwechseln zu

$$SymbLen_{Grob} = \frac{f_{Samp}}{SR_{Grob}} \ .$$

Mit Hilfe der so ermittelten Werte wird anschließend eine Regressionsanalyse 27 durchgeführt. Zum Bestimmen der Regressionsgeraden wird in einem XY-Diagramm die X-Achse durch den Signalbitwert, also die Anzahl der zu einer Symbollänge korrespondierenden Bits, festgelegt. Auf dieser X-Achse wird die Anzahl der Bits eines Symbols zwischen zwei Symbolwechseln, die zuvor berechnet wurde, als unabhängige Variable aufgefaßt. Auf der Y-Achse wird die entsprechende Symbollänge als Zeitdauer, die zuvor aus den Nulldurchgängen des Basisbandsignals bestimmt wurde, aufgetragen. Die sich so ergebenden Punkte in dem XY-Diagramm werden mit Hilfe einer Regressionsgeraden genähert. Die Regressionsgerade liefert damit einen genaueren Wert für die Symbolrate und den Phasen-Offset zum optimalen Abtastzeitpunkt. Gemäß der Geradengleichung

$$f(x) = a + b \cdot x$$

bildet der Y-Abschnitt a der Geradengleichung den Phasen-Offset und die Steigung b der Geraden den optimalen Schätzwert für die Symbolrate.

Rechnerisch ergibt sich der Y-Abschnitt a zu

$$a = \left( \frac{\sum y_n}{N - \frac{b \sum x_n}{N}} \right) \ .$$

Die Steigung der Geraden b ergibt sich rechnerisch zu

$$b = \left( \frac{\sum x_n y_n - \frac{\sum x_n \sum y_n}{N}}{\sum x_n^2 - \frac{\sum x_n \sum x_n}{N}} \right) \ .$$

Dabei ist $x_n$ die geschätzte Anzahl der Bits pro Symbollänge und $y_n$ die Symbollänge in Zeiteinheiten. N ist die Summe der Werte, aus denen die Regressionsgerade bestimmt wird.

Nachdem die Steigung der Regressionsgeraden durch die Regressionsanalyse 27 bestimmt wurde, läßt sich nun in einfacher Weise die Symbolrate mit einer zweiten, höheren Genauigkeit bestimmen. Diese Symbolrate mit höherer Genauigkeit $SR_{Fein}$ ergibt sich dabei zu $$SR_{Fein} = \frac{f_{Samp}}{b} \ .$$

Nachdem auf diese Weise sowohl der Offset als auch die Symbolrate mit einer erheblichen Genauigkeit festgestellt wurden, wird das komplexe Basisbandsignal 11 nach der Tiefpaßfilterung durch den Tiefpaß 25 zeitrichtig abgetastet. Das Ergebnis dieser Abtastung wird in einem Histogramm 28 der Frequenz aufgetragen. Die Anpassung des Histogramms erfolgt dabei auf den größtmöglichen Frequenz-Shift. Das so erhaltene Histogramm 28 kann dann mit bekannten Methoden zur Mustererkennung oder einem neuronalen Netz weiter ausgewertet werden.

Bei dem in Fig. 3 dargestellten und ausführlich erläuterten Ausführungsbeispiel wird als Momentanwert die Momentanfrequenz bei einem FSK-Modulationsverfahren herangezogen. Ebenso ist jedoch die Verwendung anderer Momentanwerte denkbar. Beispielsweise kann bei einem ASK-Verfahren die Momentanamplitude oder bei einem PSK-Verfahren die Momentanphase in entsprechender Weise ausgewertet werden.

Bei digital modulierten Signalen wird zur Überprüfung des korrekten Empfangs durch einen Empfänger ein sogenanntes ARQ-Verfahren verwendet. Diese ARQ (Automatic Repeat Request)-Verfahren führen dazu, daß ein Signal in aufeinanderfolgenden Bursts gesendet wird, wobei zwischen den einzelnen Bursts Signalpausen entstehen. Diese Signalpausen werden durch den Empfänger genutzt, um seinerseits eine Rückmeldung über die korrekte Auswertung des vorangegangenen empfangenen Bursts zu senden. Diese Signalpausen reduzieren die Genauigkeit, mit der mit Hilfe der Regressionsanalyse die Symbolrate sowie der Phasen-Offset bestimmt werden können. Bei der Regressionsauswertung sollen daher die Signalpausen unberücksichtigt bleiben.

Mit Hilfe einer Autokorrelation des komplexen Basisbandsignals 11 können Signalperioden bekannter Verfahren erkannt werden. Bevor die Autokorrelation durchgeführt werden kann, müssen die Flanken der Symbolwechsel in dem komplexen Basisbandsignal 11 detektiert werden. Die anschließend durchgeführte Korrelation ergibt Korrelationsmaxima, deren Lage typisch für bestimmte Übertragungsverfahren ist. Mit Hilfe der Information über das verwendete Verfahren ist eine gezielte Rahmensynchronisation möglich. Durch die Rahmensynchronisation können somit gezielt diejenigen Anteile eines empfangenen Signals untersucht werden, in denen tatsächlich ein Signal und nicht eine Signalpause vorhanden ist. Damit werden Störanteile für die Regressionsanalyse unterdrückt.

Eine Bestimmung der Symbolrate sowohl des Phasen-Offsets mit der zu Fig. 3 erläuterten Methode ist für höherwertige FSK-Verfahren störanfällig. Auf die genaue Bestimmung der Symbolrate mit Hilfe der Regressionsanalyse wird im Fall von Multitone-Signalen daher verzichtet. Statt dessen wird in diesem Fall lediglich die Bestimmung der ersten Symbolrate mit einer niedrigeren Genauigkeit gemäß den Verfahrensschritten 21 bis 24 durchgeführt. Um dabei die Frequenzauflösung flexibel wählen zu können, wird anstelle einer FFT in Verfahrensschritt 23 ein Goertzel-Algorithmus verwendet, bei dem die Frequenzauflösung flexibler gewählt werden kann. Das mit Hilfe des Goertzel-Algorithmus berechnete Spektrum wird dann mit bekannten spektralen Merkmalen höherwertiger FSK-Verfahren verglichen. Da sich für höherwertige FSK-Verfahren charakteristische Spektren ergeben, ist eine Grobbestimmung der Symbolrate in diesem Fall ausreichend, um eine Zuordnung zu einer bekannten Modulationsart zu treffen.

Wie es bereits bei der Erläuterung der Vorklassifizierung ausgeführt wurde, gibt es zwei unterschiedliche Varianten der Phasenmodulation. Die unterschiedlichen Verfahren werden als A- und B-Varianten bezeichnet. Bei allen Verfahren, die eine taktphasen- und trägerphasenkompensierte Abtastfolge voraussetzen, muß daher auch die Variante A oder B bestimmt werden. Dabei entsteht das Problem, daß, im Gegensatz zu der A-Variante, bei der Phasensprünge mit den Werten

$$\Delta\phi = i\frac{2\pi}{M}$$ auftreten, bei jedem Sprung ein fester Phasenversatz hinzukommt. Für die Variante B ergeben sich daher die möglichen Phasensprünge zu

$$\Delta\phi_B = i\frac{2\pi}{M} + \frac{\pi}{M}.$$ Für beide Varianten kann der Faktor i Werte aus einem Intervall von 0 bis M-1 annehmen. Für eine Weiterverarbeitung des Signals muß eine Frequenzverstimmung zwischen Emitter und Empfänger kompensiert werden. Hierzu werden Differenzphasenwerte gebildet. Bei der Kompensation der Frequenzverstimmung mittels der Differenzphasenwerte passiert es jedoch, daß die zusätzliche feste Phasenverschiebung bei der B-Variante der Frequenzverstimmung zuerkannt wird. Um dies zu erkennen, werden zwei Analyseschritte durchgeführt. Die Ergebnisse der beiden Analyseschritte werden anschließend miteinander verglichen.

In einem ersten Schritt werden die Differenzphasen aufeinanderfolgender Symbole eines demodulierten komplexen Basisbandsignals 11 in einem I/Q-Diagramm 29 und einem Phasen-Histogramm 30 aufgetragen. Das I/Q-Diagramm kann mit den Methoden der Clusteranalyse oder das Histogramm kann mit bekannten Methoden der Mustererkennung oder einem neuronalen Netz weiter ausgewertet werden. Für eine kohärente Auswertung muß eine Trägerphasenkompensation durchgeführt werden. Aufgrund der Ergebnisse der Vorklassifizierung kann auf bestimmte Modulationsverfahren und deren Ordnung geschlossen werden. Damit können die bekannten Algorithmen "Non-Data Aided" (NDA) oder die "Decision Directed" (DD) zur Trägerphasenschätzung verwendet werden. Bei der DD-Methode werden die Datensymbole geschätzt und diese Schätzung mit in die Ermittlung der Trägerphase eingebracht. Ein Beispiel für die DD-Methode ist die Costal Loop und für die NDA-Methode der Nth-Power-Algorithmus.

Der Schätzalgorithmus im Falle einer DD-Methode für die zu bestimmende Trägerphase θ ist

$$\hat{\theta} = \arg\left\{ \sum_{k=1}^{L-1} \hat{c}_k^* \chi(k) \right\},$$

wobei $\hat{c}_k$ das geschätzte k-te Symbol ist und L die Anzahl der Symbolwerte des Empfangssignalvektors r ist. Da der Konstellationsraum um den gesuchten Phasenwinkel gedreht ist, muß für eine sinnvolle Symbolschätzung ein iterativer Ansatz gewählt werden. Hierbei ergibt sich der k+1-te Iterationsschritt aus dem k-ten Schritt, korrigiert um einen Fehlerterm $\gamma e(k)$.

$$\hat{\theta}(k+1) = \hat{\theta}(k) + \gamma e(k)$$

Der Fehlervektor e ergibt sich dabei aus der Ableitung der Log-Likelihood-Funktion und (aufgrund des iterativen Ansatzes) der Elimination der Summe:

$$\frac{d}{d\bar{\theta}} \ln \Lambda(r|\bar{\theta}) = \sum_{k=0}^{L-1} \text{Im}\left\{ \hat{c}_k^* \chi(k) e^{-j\bar{\theta}} \right\}$$

$$e(k) = \text{Im}\left\{ \hat{c}_k^* \chi(k) e^{-j\bar{\theta}} \right\}$$

In einem zweiten Schritt wird das trägerfrequenzkompensierte Basisbandsignal in einem I/Q-Diagramm 31 und einem Phasenhistogramm 32 aufgetragen. Das I/Q-Diagramm kann mit den Methoden der Clusteranalyse oder das Histogramm kann mit bekannten Methoden der Mustererkennung oder einem neuronalen Netz weiter ausgewertet werden.

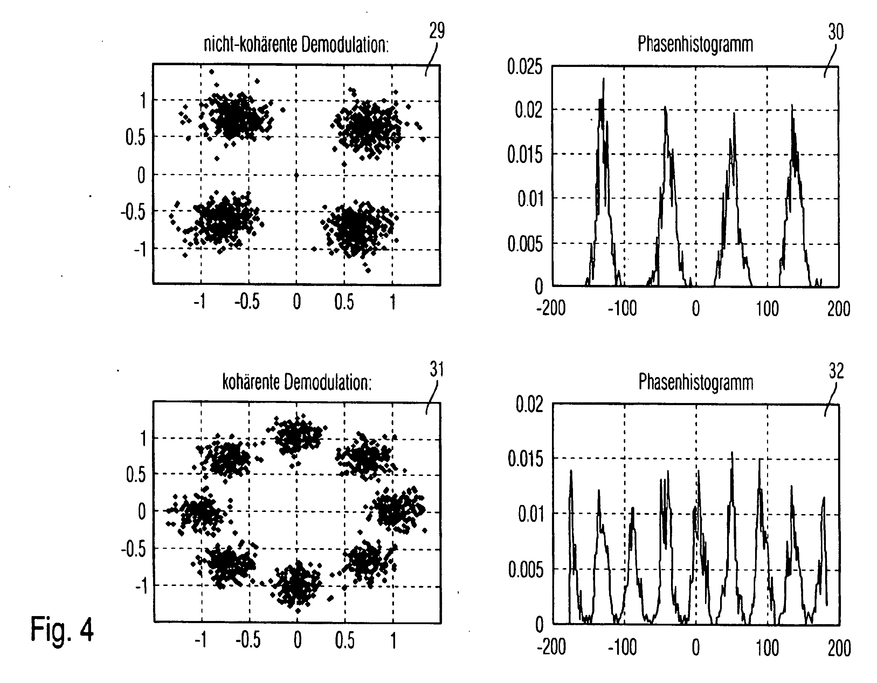

Das in Fig. 4 angegebene Beispiel zeigt eine Pi/4-DQPSK (entspricht PSK4B-Variante) mit nicht-kohärenter und kohärenter (Costas Loop)-Demodulation.

Im Gegensatz zur PSK-Ordnung, die sich aus dem Diagramm 30 der nicht-kohärenten Demodulation ergibt, ist die PSK-Ordnung, wie sie sich aus dem Diagramm 32 bei der kohärenten Demodulation des Signals ergibt, acht. Diese beiden Ordnungen der nichtkohärenten und der kohärenten Demodulation werden nun miteinander verglichen. Ist zwischen den PSK-Ordnungen bei kohärenter Auswertung und nichtkohärenter Auswertung ein Faktor 2 feststellbar, so handelt es sich um eine B-Variante der Phasenmodulation.

Durch das Zusetzen der Trägerphase und Trägerfrequenz nach der Trägerphasenkompensation des komplexen Basisbandsignals 11 zur kohärenten Demodulation und dem anschließenden Vergleich der kohärenten Auswertung mit der nichtkohärenten Auswertung läßt sich somit das aus der Vorklassifikation bestimmte Modulationsverfahren einschließlich der dort ermittelten Variante A oder B bestätigen oder widerlegen. Ein bestätigtes Modulationsverfahren weist eine erhebliche Konfidenz auf.

Eine weitere Möglichkeit zur Verwendung von Vorkenntnissen sind Symbolfolgen, die ebenfalls charakteristisch für bestimmte Modulationsarten sind. Bekannte Symbolfolgen von Modulationsarten werden als Referenzsymbole in einer Datenbank gespeichert. Um nicht sämtliche gespeicherten Referenzsymbolströme überprüfen zu müssen, wird zunächst eine Vorauswahl aus den möglichen Referenzsymbolströmen getroffen. Eine solche Vorauswahl wird aufgrund des Ergebnisses der Vorklassifikation durchgeführt. Eine weitere Reduzierung kann mit Hilfe einer Autokorrelation erreicht werden.

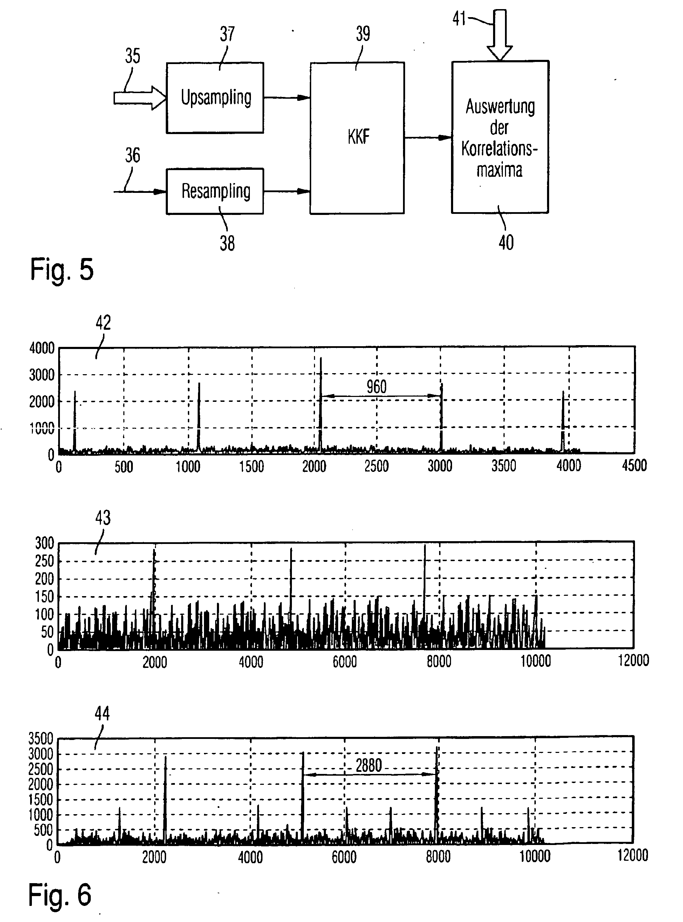

Zur Durchführung der Autokorrelation werden zunächst die I/Q-Werte aus dem empfangenen Signal 1 ermittelt und anschließend mit dieser komplexen Eingangsfolge eine Autokorrelation durchgeführt. Das Ergebnis einer solchen Autokorrelation der komplexen Eingangsfolge kann z.B. die in dem Diagramm 42 der Fig. 6 gezeigten Korrelationsmaxima im Abstand von 960 Samples ergeben. Diese periodisch auftretenden Linien können für bestimmte Rahmenstrukturen des empfangenen Signals typisch sein. Die Linienabstände der periodisch auftretenden Linien können z.B. einen Interleaving Mode oder eine Teilstruktur eines Datenrahmens wiedergeben, der einen Rückschluß auf ein bestimmtes Übertragungsverfahren erlaubt.

Mit Hilfe der Kenntnis über die Linien einer Autokorrelation einer komplexen Eingangsfolge eines Signals 1 ist es ebenfalls möglich, eine Untergruppe aus der gesamten Anzahl möglicher Referenzsymbolströme auszuwählen. Weitere Kriterien zur Durchführung einer Vorselektion sind die Bandbreite oder die Symbolrate, wie sie bei linearen Modulationsverfahren bei der Durchführung der Vorklassifizierung ermittelt wurden.

Nachdem nun die Auswahl der möglichen Referenzsymbolströme getroffen wurde, wird die Kreuzkorrelation zwischen dem komplexen Basisbandsignal 11 und den ermittelten Referenzsymbolströmen durchgeführt. Der Verfahrensablauf ist schematisch in Fig. 5 dargestellt. Um die Datenraten zunächst aneinander anzupassen, werden sowohl der Referenzsymbolstrom 35 als auch die Eingangsfolge von I/Q-Werten 36 auf eine gleiche Abtastrate gebracht. In Verfahrensschritt 37 wird hierzu ein sogenanntes Upsampling durchgeführt, das zu einer zweifachen Überabtastung des Referenzsymbolstroms 35 führt. Entsprechend wird auch für das komplexe Basisbandsignal 36 ein sogenanntes Resampling in Schritt 38 durchgeführt, so daß nun die beiden mit identischer Abtastrate vorliegenden Symbolströme in Schritt 39 der Kreuzkorrelationsfunktion zugeführt werden.

Die Auswertung der sich ergebenden Linien erfolgt in Schritt 40. Der entsprechenden Auswerteeinheit werden hierzu bekannte Linienabstände 41 zugeführt und es wird ein Vergleich mit den Linien, die mittels der Kreuzkorrelation ermittelt wurde, durchgeführt. Ein Ergebnis eines solchen Kreuzkorrelation ist beispielhaft in Fig. 6, in Diagramm 43 bzw. Diagramm 44, dargestellt. Während bei dem Diagramm 43 eine reduzierte Eingangsfolge der Kreuzkorrelation zugeführt wurde, werden bei dem dritten Diagramm 44 zusätzliche Signalabschnitte der Kreuzkorrelation zugeführt. Dementsprechend signifikanter ist das Linienmuster in dem dritten Diagramm 44.

Zusätzlich zu der Kreuzkorrelation zwischen dem komplexen Basisbandsignal 11 und dem komplexen Referenzsymbolstrom wird eine Kreuzkorrelation auch entweder mit der konjugiert komplexen Eingangsfolge und dem komplexen Referenzsymbolstrom oder aber zwischen dem komplexen Basisbandsignal 11 und dem konjugiert komplexen Referenzsymbolstrom durchgeführt. Die Durchführung der Kreuzkorrelation mit einer konjugiert komplexen Symbolfolge ermöglicht das Erkennen einer Kehrlage.

Die Erfindung ist nicht auf die beschriebenen Ausführungsbeispiele beschränkt. Vielmehr ist eine Kombination der einzelnen Merkmale der verschiedenen Beispiele in beliebiger Weise möglich.

**Patentansprüche**

1. Verfahren zur Klassifizierung von digital modulierten Signalen mit folgenden Verfahrensschritten:

   - Empfangen eines digital modulierten ASK, PSK oder FSK Signals (1),
- Erzeugen eines komplexen Basisbandsignals (11),
- Auswerten des komplexen Basisbandsignals (11) zur Klassifizierung,

wobei das Signal (1)

-- durch Auswerten des komplexen Basisbandsignals (11) im Frequenzbereich in einer ersten Auswertestufe vorklassifiziert (10) wird und
-- durch Auswerten des komplexen Basisbandsignals (11) im Zeitbereich in einer zweiten Auswertestufe unter Berücksichtung eines Ergebnisses der ersten Auswertestufe des komplexen Basisbandsignals (11) im Frequenzbereich (12, 13, 14) im Hinblick auf das Ergebnis der Vorklassifizierung analysiert wird,

**dadurch gekennzeichnet,**
**dass** zur genaueren Analyse in der zweiten Auswertestufe für das komplexe Basisbandsignal (11) zunächst eine erste Symbolrate erster Genauigkeit ermittelt wird und dass ausgehend aus der ersten Symbolrate erster Genauigkeit eine zweite Symbolrate höherer Genauigkeit und ein Phasen-Offset ermittelt wird, wobei zur Ermittlung der zweiten Symbolrate und des Phasen-Offsets eine Regressionsanalyse auf Basis von Symbollängen des komplexen Basisbandsignals (11) durchgeführt wird.

2. Verfahren nach Anspruch 1,
**dadurch gekennzeichnet,**
**dass** auf der Basis des Ergebnisses der Vorklassifikation eine Eingrenzung möglicher Referenzsymbolströme (35) erfolgt.

3. Verfahren nach Anspruch 1 oder 2,
**dadurch gekennzeichnet,**
**dass** in der zweiten Auswertestufe zur Auswertung eine Autokorrelation einer Eingangsfolge des komplexen Basisbandsignals (11) durchgeführt wird.

4. Verfahren nach einem der Ansprüche 1 bis 3,
**dadurch gekennzeichnet,**
**dass** in der zweiten Auswertestufe zur Auswertung im Zeitbereich eine Kreuzkorrelation (39) einer Eingangsfolge (36) von I/Q-Werten des komplexen Basisbandsignals mit einem komplexen Referenzsymbolstrom (35) durchgeführt wird.

5. Verfahren nach einem der Ansprüche 1 bis 4,
**dadurch gekennzeichnet,**
**dass** die Symbolrate erster Genauigkeit im Zeitbereich aus einem Momentanwert der Frequenz bestimmt wird, falls das Signal (1) ein FSK Signal (1) ist, aus einem Momentanwert der Amplitude bestimmt wird, falls das Signal (1) ein ASK Signal (1) ist und aus einem Momentanwert der Phase bestimmt wird, falls das Signal (1) ein PSK Signal (1) ist.

6. Verfahren nach einem der Ansprüche 1 bis 5,
**dadurch gekennzeichnet,**
**dass** zunächst aus einem berechneten Spektrum des komplexen Basisbandsignals (11) die erste Symbolrate mit der ersten Genauigkeit bestimmt wird.

7. Verfahren nach Anspruch 6,
**dadurch gekennzeichnet,**
**dass** zur Bestimmung der ersten Symbolrate erster Genauigkeit im Zeitbereich des komplexen Basisbandsignals (11) eine nichtlineare Operation eines Momentanwertes der Frequenz durchgeführt wird, falls das Signal (1) ein FSK Signal (1) ist, der Amplitude, falls das Signal (1) ein ASK Signal (1) ist und der Phase, falls das Signal (1) ein PSK Signal (1) ist, wobei als nichtlineare Operation eine Differenzwertbildung (21) durchgeführt wird.

8. Verfahren nach Anspruch 7,
**dadurch gekennzeichnet,**
**dass** zur Differenzwertbildung (21) verzögerte Momentanwerte der Frequenz, falls das Signal (1) ein FSK Signal (1) ist, der Amplitude, falls das Signal (1) ein ASK Signal (1) ist und der Phase, falls das Signal (1) ein PSK Signal (1) ist, im Zeitbereich verwendet werden.

9. Verfahren nach einem der Ansprüche 1 bis 8,
**dadurch gekennzeichnet,**
**dass** ausgehend von dem Ergebnis der Vorklassifizierung (10) aus der ersten Auswertestufe eine kohärente Demodulation durch Zusetzen einer Trägerphase und einer Trägerfrequenz zu dem komplexen Basisbandsignal (11) durchgeführt wird, falls das Signal (1) ein PSK Signal (1) ist.

10. Verfahren nach Anspruch 9,
**dadurch gekennzeichnet,**
**dass** ein Vergleich zwischen einer spektralen Analyse eines ersten Phasen-Histogramms (30) einer nichtkohärenten Demodulation und einer spektralen Analyse eines zweiten Phasen-Histogramms (32) einer kohärenten Demodulation durchgeführt wird, falls das Signal (1) ein PSK Signal (1) ist.

11. Computerprogramm mit Programmcode-Mitteln, um alle Schritte gemäß einem der Ansprüche 1 bis 10 durchführen zu können, wenn das Programm auf einem Computer oder einem digitalen Signalprozessor ausgeführt wird.

12. Computerprogramm-Produkt mit auf einem maschinenlesbaren Datenträger gespeicherten Programmcode-Mitteln, um alle Schritte gemäß einem der Ansprüche 1 bis 10 durchführen zu können, wenn das Programm auf einem Computer oder einem digitalen Signalprozessor ausgeführt wird.

## Claims

1. Method for classifying digitally-modulated signals comprising the following procedural stages:

   - reception of a digitally-modulated ASK, PSK or FSK signal (1),
   - generation of a complex baseband signal (11),
   - evaluation of the complex baseband signal (11) for a classification,

   wherein the signal (1) is:

   -- pre-classified (10) in a first evaluation stage by evaluating the complex baseband signal (11) in the frequency domain and
   -- analysed in a second evaluation stage by evaluating the complex baseband signal (11) in the time domain taking into consideration a result from the first evaluation stage of the complex baseband signal (11) in the frequency domain (12, 13, 14) with regard to the result of the pre-classification,

   **characterised in that**,
   for a more accurate analysis of the complex baseband signal (11) in the second evaluation stage, a first symbol rate is initially determined at a first accuracy and, on the basis of the first symbol rate at the first accuracy, a second symbol rate at a higher accuracy and a phase offset are determined, wherein a regression analysis based on symbol lengths of the complex baseband signal (11) is implemented in order to determine the second symbol rate and the phase offset.

2. Method according to claim 1,
   **characterised in that**
   a limitation of possible reference-symbol streams (35) is implemented on the basis of the result of the pre-classification.

3. Method according to claim 1 or 2,
   **characterised in that**
   an auto-correlation of an input sequence of the complex baseband signal (11) is implemented in the second evaluation stage of the evaluation.

4. Method according to any one of claims 1 to 3,
   **characterised in that**
   a cross-correlation (39) of an input sequence (36) of I/Q values of the complex baseband signal with a complex reference-symbol stream (35) is implemented in the second evaluation stage of the evaluation in the time domain.

5. Method according to any one of claims 1 to 4,
   **characterised in that**
   the symbol rate at the first accuracy is determined in the time domain from a momentary value of the frequency, if the signal (1) is an FSK signal (1), from a momentary value of the amplitude, if the signal (1) is an ASK signal (1), and from a momentary value of the phase, if the signal (1) is a PSK signal (1).

6. Method according to any one of claims 1 to 5,
   **characterised in that**
   the first symbol rate is initially determined at the first accuracy from a calculated spectrum of the complex baseband signal (11).

7. Method according to claim 6,
   **characterised in that**
   a nonlinear operation of a momentary value respectively of the frequency, if the signal (1) is an FSK signal (1), of the amplitude, if the signal (1) is an ASK signal (1), and of the phase, if the signal (1) is a PSK signal (1), is implemented in order to determine the first symbol rate of the complex baseband signal (11) within the time domain at the first accuracy, wherein a differential-value formation (21) is implemented as the nonlinear operation.

8. Method according to claim 7,
   **characterised in that**,
   for the differential-value formation (21), delayed momentary values respectively of the frequency, if the signal (1) is an FSK signal (1), of the amplitude, if the signal (1) is an ASK signal (1), and of the phase, if the signal (1) is a PSK signal (1), are used within the time domain.

9. Method according to any one of claims 1 to 8,
   **characterised in that**
   a coherent demodulation based on the result of the pre-classification (10) from the first evaluation stage is implemented by adding a carrier phase and a carrier frequency to the complex baseband signal (11), if the signal (1) is a PSK signal (1).

10. Method according to claim 9,
    **characterised in that**
    a comparison between a spectral analysis of a first phase histogram (30) of a non-coherent demodulation and a spectral analysis of a second phase histogram (32) of a coherent demodulation is implemented, if the signal (1) is a PSK signal (1).

11. Computer program with program-code means for the implementation of all of the stages according to any one of claims 1 to 10, when the program is run on a computer or a digital signal processor.

**12.** Computer software product with program-code means stored on a machine-readable data medium for the implementation of all of the stages according to any one of claims 1 to 10, when the program is run on a computer or a digital signal processor.

## Revendications

**1.** Procédé de classification de signaux numériques modulés comportant les étapes de procédé suivantes :

- réception d'un signal ASK, PSK ou FSK (1) numérique modulé,
- génération d'un signal de bande de base complexe (11),
- évaluation du signal de bande de base complexe (11) pour classification, moyennant quoi le signal (1)

-- étant préclassé (10) par l'évaluation du signal de bande de base complexe (11) dans une plage de fréquences dans un premier niveau d'évaluation et
-- étant analysé, en fonction du résultat de la préclassification, par l'évaluation du signal de bande de base complexe (11) dans la plage temporelle dans un second niveau d'évaluation en fonction du résultat du premier niveau d'évaluation du signal de bande de base complexe (11) dans la plage de fréquences (12, 13, 14),

**caractérisé en ce**
**qu'**un premier degré de symbole d'une première précision est d'abord déterminé pour une analyse précise dans le second niveau d'évaluation pour le signal de bande de base complexe (11), et en ce qu'un second degré de symbole d'une précision plus élevée et un décalage de phase sont déterminés à partir du premier degré de symbole d'une première précision, une analyse de régression étant réalisée sur la base des longueurs des symboles du signal de bande de base complexe (11) pour déterminer le second degré de symbole et le décalage de phase.

**2.** Procédé selon la revendication 1,
**caractérisé en ce**
**qu'**une limitation des flux de symboles de référence possibles (35) a lieu sur la base du résultat de la préclassification.

**3.** Procédé selon la revendication 1 ou 2,
**caractérisé en ce**
**qu'**une corrélation automatique d'une séquence d'entrée du signal de bande de base complexe (11) est réalisée dans le second niveau d'évaluation pour évaluation.

**4.** Procédé selon l'une quelconque des revendications 1 à 3,
**caractérisé en ce**
**qu'**une corrélation en croix (39) d'une séquence d'entrée (36) des valeurs I/Q du signal de bande de base complexe est réalisée avec un flux de symboles de référence complexe (35) dans le second niveau d'évaluation pour évaluation dans une plage temporelle.

**5.** Procédé selon l'une quelconque des revendications 1 à 4,
**caractérisé en ce**
**que** le degré de symbole d'une première précision est déterminé dans une plage temporelle à partir d'une valeur instantanée de la fréquence, si le signal (1) est un signal FSK (1), à partir d'une valeur instantanée de l'amplitude, si le signal (1) est un signal ASK (1) et à partir d'une valeur instantanée de la phase, si le signal (1) est un signal PSK (1).

**6.** Procédé selon l'une quelconque des revendications 1 à 5,
**caractérisé en ce**
**que** le premier degré de symbole est déterminé avec la première précision d'abord à partir d'un spectre calculé du signal de bande de base complexe (11).

**7.** Procédé selon la revendication 6,
**caractérisé en ce**
**qu'**une opération non linéaire d'une valeur instantanée de la fréquence est réalisée pour déterminer le premier degré de symbole d'une première précision dans une plage temporelle du signal de bande de base complexe (11), si le signal (1) est un signal FSK (1), de l'amplitude, si le signal (1) est un signal ASK (1) et de la phase, si le signal (1) est un signal PSK (1), moyennant quoi la formation d'une valeur différentielle (21) est réalisée comme opération non linéaire.

**8.** Procédé selon la revendication 7,
**caractérisé en ce**
**que** les valeurs instantanées retardées de la fréquence destinées à former la valeur différentielle (21), si le signal (1) est un signal FSK (1), l'amplitude, si le signal (1) est un signal ASK (1) et la phase, si le signal (1) est un signal PSK (1), sont utilisées dans une plage temporelle.

**9.** Procédé selon l'une quelconque des revendications 1 à 8,
**caractérisé en ce**
**qu'**une démodulation cohérente est réalisée à partir du résultat de la préclassification (10) à partir du premier niveau d'évaluation grâce à l'ajout d'une phase porteuse et d'une fréquence porteuse au signal de bande de base complexe (11), si le signal (1) est un signal PSK (1).

**10.** Procédé selon la revendication 9,
**caractérisé en ce**
**qu'**une comparaison entre une analyse spectrale d'un premier histogramme de phases (30) d'une démodulation non cohérente et d'une analyse spectrale d'un second histogramme de phases (32) d'une démodulation cohérente est réalisée, si le signal (1) est un signal PSK (1).

**11.** Programme informatique avec des moyens de code de programme, pour pouvoir réaliser toutes les étapes selon l'une quelconque des revendications 1 à 10, lorsque le programme est exécuté sur un ordinateur ou un processeur de signaux numériques.

**12.** Produit de programme informatique avec des moyens de code de programme enregistrés sur un support de données pouvant être lu au moyen d'une machine, pour pouvoir réaliser toutes les étapes selon l'une quelconque des revendications 1 à 10, lorsque le programme est exécuté sur un ordinateur ou sur un processeur de signaux numériques.

EP 1 729 471 B1

Fig. 1

Fig. 2

Fig. 3

EP 1 729 471 B1

Fig. 4

nicht-kohärente Demodulation: 29

Phasenhistogramm 30

kohärente Demodulation: 31

Phasenhistogramm 32

EP 1 729 471 B1

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6690746 B1

- US 6240282 B

**In der Beschreibung aufgeführte Nicht-Patentliteratur**

- **BOUDREAU et al.** A fast automatic modulation recognition algorithm and its implementation in a spectrum monitoring application. *MILCOM 2000. 21 ST CENTURY MILITARY COMMUNICATIONS CONFERENCE PROCEEDINGS 22-25 OCTOBER 2000,* 22. Oktober 2000, vol. 2